# EUROPEAN PATENT APPLICATION

(11) **EP 2 112 853 A1**
(43) Date of publication of application: **28.10.2009**
(21) Application number: 08154850.5
(22) Date of filing: 21.04.2008
(51) Int. Cl.: H04W 64/00

(54) **Enhanced finding of subscribers in communications system**

(71) Applicant: Nokia Siemens Networks Oy, 02610 Espoo (FI)
(72) Inventor: Niemenmaa, Jarko, 02920, Espoo (FI); Ruutu, Ville, 02210, Espoo (FI)
(74) Representative: Äkräs, Tapio Juhani

(57) **Abstract**

In the present solution, a gateway node (GMLC-I, PDC) of a communications system (S) receives a find-subscribers-in-area request from an application node (LAP), and a prioritization act is performed according to predetermined prioritization criteria. The prioritization act is performed on the basis of passive location data received in the gateway node (PDC), and one or more user terminals are selected as polling priority user terminals (UE, UE2). On the basis of said selection, a core network node (MSC/VLR) is requested to perform an act for generating updated passive location data. Thus, the gateway node (PDC) receives updated passive location data including information on detected polling priority user terminals (UE, UE2). On the basis of the updated data, the gateway node (GMLC-I, PDC) is able to provide information on the detected user terminals (UE, UE2) to the application node (LAP).

## Description

### FIELD OF THE INVENTION

The present invention relates to location-based services (LBS), and more particularly to a method of finding subscribers in an area.

### BACKGROUND OF THE INVENTION

Mobile (wireless) communications systems provide mobility for a user of the communications system. An example of such a mobile communications system is a public land mobile network (PLMN), of which a cellular radio communications network is an example. The cellular radio communications network allows a mobile station (MS) to move from one location to another. The network is organized in cells which define how the locations are managed. The cells of a cellular radio network provide the mobile stations with access to the communications system. The cell can be defined as a certain geographical area which is provided with wireless coverage by at least one base station (BS) via a wireless interface between the base station and the user terminal. The base station forms a part of a radio access network (RAN). The radio access network is connected to a core network (CN), which provides call control and performs mobility and high-level security functions such as location updating and authentication. In such systems, the mobile network and/or the user terminal such as a mobile station may be utilized for providing information on the geographical location of the user terminal and the user thereof. A communications system comprising the necessary network elements, entities, functionalities and interfaces required to provide location information is said to support location services (LCS).

Patent application publication US 2007/0015522 A1 discloses the use of passive location data for providing location services to a location services client. US 2007/0015522 A1 discloses a find subscribers in area (FSIA) functionality implemented in an intelligent gateway mobile location centre (GMLC). FSIA refers to a concept in which a location-based services (LBS) application (i.e. a client) may request from GMLC a list of subscribers that are located in a certain geographical area. According to US 2007/0015522 A1, GMLC utilizes passive location data in order to find subscribers in a certain geographical area. The passive location data may include any available data that includes some information about the location of a subscriber terminal. A mobile switching centre/visitor location register MSC/VLR sends the passive location data to GMLC. This passive location data consists of updates in the VLR database. In GSM and WCDMA systems, the cellular network knows within the accuracy of the location area where a certain terminal is. This is needed for paging purposes. Thus the passive location data includes a location area code (LAC) and a cell identity (CI) of a user terminal. The passive location data is updated when the user terminal is active (e.g. due to a call or an SMS), when there is a location area change (the user terminal moves from one location area to another), and/or when there is a periodic location update.

A problem associated with the above arrangement is that a FSIA functionality based on the passive location data is best-effort. It cannot be guaranteed that all subscribers in the defined area are found. This is because there may not be valid passive location data available e.g. for user terminals that have been idle.

### BRIEF DESCRIPTION OF THE INVENTION

An object of the present invention is thus to provide a method, system, gateway node, and a core network node for implementing the method so as to solve the above problem. The objects of the invention are achieved by a method and an arrangement which are characterized by what is stated in the independent claims. Preferred embodiments of the invention are disclosed in the dependent claims.

The invention is based on the idea of enhancing the find subscribers in area (FSIA) functionality with selective active location information polling. Active location information polling means that the system initiates activities to obtain location information on the user terminals. Selective means that active polling is only applied to certain user terminals. In the present solution, a prioritization act is performed in a gateway node according to predetermined prioritization criteria. The prioritization act is performed on the basis of passive location data received in the gateway node. By means of the prioritization, one or more user terminals are selected as polling priority user terminals. On the basis of said selection, a core network node is requested to perform an act for generating updated passive location data on the user terminals. Thus the gateway node receives updated passive location data including information on polling priority user terminals detected in a defined area. On the basis of the updated passive location data, the gateway node is able to provide information on the detected user terminals to an application node.

An advantage of the method and arrangement of the present solution is that it enables the provision of applications such as location-based advertising. The present solution may be implemented by utilizing existing hardware. The present solution enables utilization of idle periods and unused transmission capacity of the location system and provision of an enhanced end-user experience.

### BRIEF DESCRIPTION OF THE DRAWINGS

In the following the invention will be described in greater detail by means of preferred embodiments with reference to the attached drawings, in which
Figure 1 illustrates a communications system according to an embodiment of the present solution;
Figure 2 illustrates signalling according to an embodiment of the present solution;
Figure 3 is a flow chart illustrating the functioning of a passive data collector according to an embodiment of the present solution;
Figure 4 is a flow chart illustrating the functioning of a mobile switching centre/visitor location register according to an embodiment of the present solution;
Figure 5 illustrates an activity behaviour analysis according to an embodiment of the present solution;
Figure 6 illustrates a geographical behaviour analysis according to an embodiment of the present solution.

### DETAILED DESCRIPTION OF THE INVENTION

In the following, embodiments of the present solution will be described with reference to a cellular or wireless communications system, such as a third generation (or beyond 3G) mobile communications system or WLAN (wireless local area network). However, the solution is not intended to be restricted to these embodiments. The present solution is applicable to any user terminal, network node, corresponding component(s), and/or to any communications system or any combination of different communications systems capable of providing location information on user terminals. The communications system may be a fixed communications system or a wireless communications system or a communications system utilizing both fixed networks and wireless networks. The protocols used, the specifications of communications systems and network nodes, especially in mobile and wireless communication, develop rapidly. Such a development may require extra changes to an embodiment. Therefore, all words and expressions should be interpreted broadly and are intended to illustrate, not to restrict, the embodiment. The relevant inventive aspect is the functionality concerned, not the network element or the equipment where it is executed.

In traditional (e.g. 3GPP and OMA) location-based services a client requests from a location server (e.g. a 3GPP gateway mobile location centre or OMA SUPL location platform) information on the location of a defined subscriber. By means of a FSIA service, the client may request identities of those subscribers that are in a defined area.

The present solution proposes performing selective active location information polling to enhance FSIA, wherein active polling means that the system initiates activities to obtain location information on user terminals and wherein selective means that active polling is only applied to certain user terminals. The present solution does not apply active polling to all user terminals since this may overload the location system. In addition to FSIA, the present solution may also be applied to any other functionality that is dependent on passive location data.

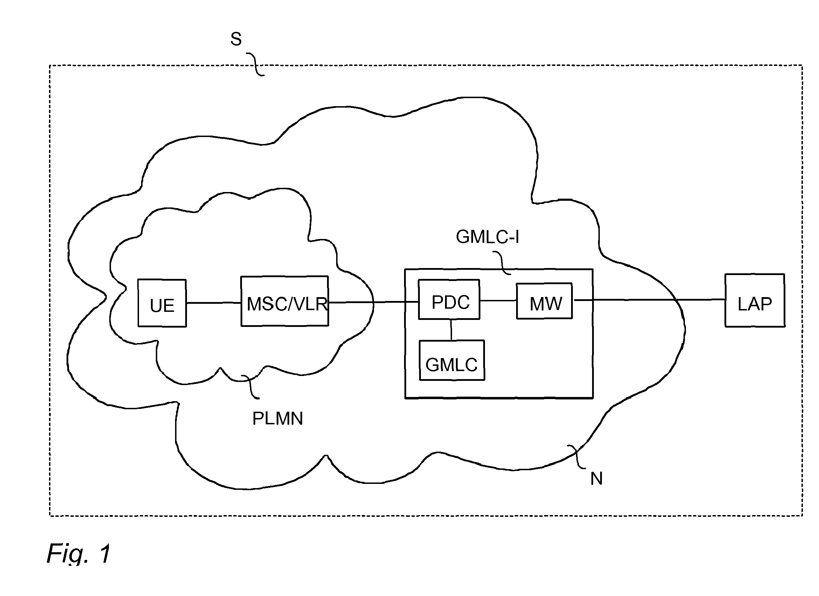

Figure 1 illustrates a communications system S according to an embodiment of the present solution. Referring to Figure 1, the communications system S comprises a wireless network, such as a public land mobile network PLMN or a wireless local area network (WLAN) operated by a network operator. The public land mobile network PLMN comprises a mobile switching centre/visitor location register MSC/VLR, to which a user terminal UE is able to connect via a suitable access network such as a radio access network (RAN, not shown in Figure 1). The system further comprises a location application LAP (such as an advertising engine) capable of requesting information on the the user terminals UE in an area by contacting a gateway mobile location centre node GMLC-I. The location application LAP may be implemented as a client that is external to an operator network N. The gateway mobile location centre node GMLC-I includes a passive data collector function PDC connected to an actual gateway mobile location centre function GMLC and to an FSIA middleware function MW. In GMLC-I, the passive data collector function PDC acts as an interface to PLMN and the FSIA middleware function MW acts as an interface to LAP. Figure 1 is a simplified version of a cellular or wireless network structure showing only components necessary for illustrating the present solution, even though those skilled in the art naturally know that a general communications system also comprises other functions and structures, which do not have to be described in more detail herein. Although each network node or function UE, MSC, VLR, GMLC-I, PDC, GMLC, MW, LAP, PLMN, N has been depicted as one entity, different modules and memory may be implemented in one or more physical or logical entities.

According to the present solution, if the location system has capacity to spare, it initiates active location information polling for selected user terminals in order to improve the likelihood of having passive or active location information available for functions such as FSIA. Active location polling may refer to 1) a normal location procedure according to e.g. the 3GPP location services standards or the open mobile alliance's (OMA) secure user plane location (SUPL) standard, or 2) other activities that generate passive location data, for example, sending of a zero-length short message to a user terminal or some other form of paging. Of these, a less loading one may be selected. The selection of a user terminal may be based on 1) categorization of certain user terminals as priority terminals (e.g. subscribers having a certain kind of higher priority subscription), 2) categorization of certain location areas as priority areas (e.g. areas where there are ongoing location-based advertising campaigns using a FSIA functionality regularly), 3) the activity behaviour of terminals, and/or 4) the geographical behaviour of terminals.

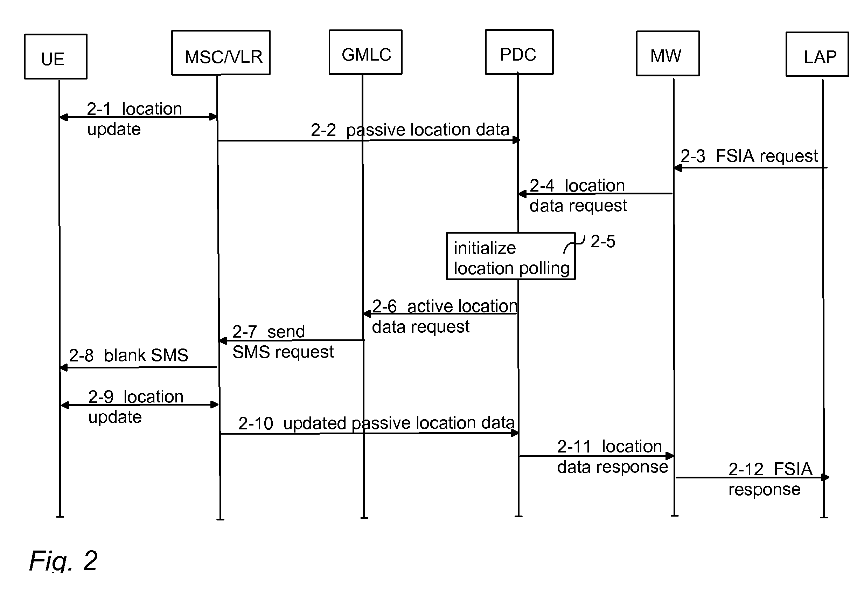

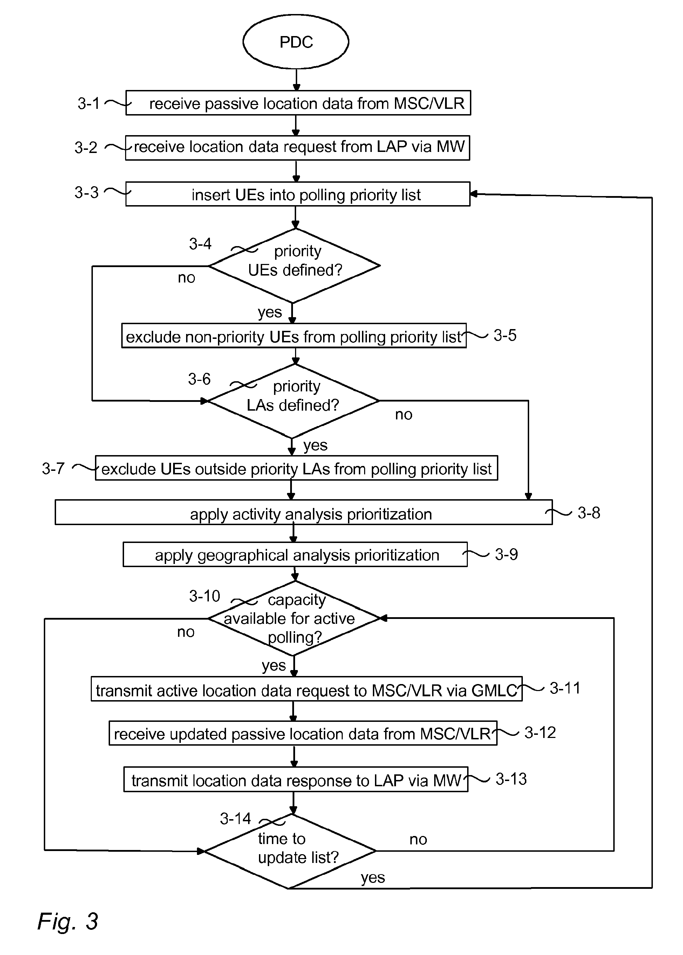

Figure 2 illustrates signalling according to an embodiment of the present solution. Referring to Figure 2, in a message 2-1, a location update of a user terminal UE (or some other initializing event generating passive location data, such as an SMS, an MMS, a call, a location area change) is carried out between MSC/VLR and UE. In response to the initializing event, a VLR database is updated (not shown), and MSC/VLR sends passive location data 2-2 to a passive data collector function PDC included in a gateway mobile location centre GMLC-I. VLR is updated and thus the passive location data is sent when the user terminal UE is active (e.g. due to a call or an SMS), when there is a location area change (the user terminal UE moves from one location area to another), and/or when there is a periodic location update. A location application LAP (such as an advertising engine) sends a find-subscribers-in-area (FSIA) request 2-3 to an FSIA middleware function included in GMLC-I. The FSIA request 2-3 includes a definition of a geographical area of interest. In response to receiving the FSIA request, FSIA middleware MW sends 2-4, to the passive data collector PDC, a request for information concerning which user terminals are in the cells covering the defined area of interest. According to the present solution, PDC makes decisions on priorities for active location polling. This means that PDC defines 2-5 a polling priority list including information on priority user terminals UE whose current location is of interest to the location system. (The procedure for defining of the polling priority list is further described below in more detail in connection with Figure 3). After the polling priority list has been defined, PDC interacts 2-6 with the actual GMLC functionality in order to get location information. According to the present solution GMLC-I (e.g. PDC and/or GMLC) is arranged to check 2-5, 2-6 whether or not the location system has spare capacity for active polling. For example, the following information may utilized by GMLC-I for deciding whether or not there is spare capacity for performing active polling of passive location data: 1) CPU load, 2) the number of location requests received in GMLC-I from application clients within certain time period, and/or 3) the number of pending location requests, FSIA requests or other service requests. If it does have spare capacity, GMLC is arranged to request 2-7 MSC/VLR to perform a location update of the user terminals UE included in the priority polling list. GMLC may, for example, request MSC/VLR to transmit a blank short message (or a blank MMS message (multimedia message) or some other signalling message that requires the paging of the user terminal UE) to the user terminals UE included in the priority polling list in order to get updated location information on the user terminals UE. In response to receiving the request 2-7, MSC/VLR transmits the blank short message 2-8 to the user terminal UE, thus initiating a location update procedure 2-9 of the user terminal UE between UE and MSC/VLR. In a way, GMLC-I requests MSC/VLR to carry out a forced paging and/or a forced location update of the user terminal UE. Thus MSC/VLR receives updated passive location data on the user terminal UE. In a message 2-10, the updated passive location data is transmitted from MSC/VLR to PDC, wherein the updated passive location data is stored, at least temporarily, in PDC (not shown in Figure 2). Based on the updated passive location data, PDC transmits a location data response 2-11 via MW to LAP. Thus LAP receives an FSIA response 2-12 from GMLC-I, i.e. a list of the detected user terminals UE in the area defined in the FSIA request.

It should be noted that the active location polling according to the present solution may be carried out continuously, e.g. as a background process. Steps/messages 2-1 and 2-2 of Figure 2 are normal passive location data processes going on in the system "all the time". Accordingly, PDC may perform/initialize steps/messages 2-5 to 2-10 in the system whenever there is spare time/capacity. Thus, the active location polling process (i.e. steps/messages 2-5 to 2-10) may be carried out before, during, and/or after the message 2-4 is received. PDC (or some other suitable network element) is able to perform the active location polling whenever desired such that if a request (e.g. an FSIA request 2-3, 2-4) for passive location data is received, there is a higher probability that valid passive location data is available.

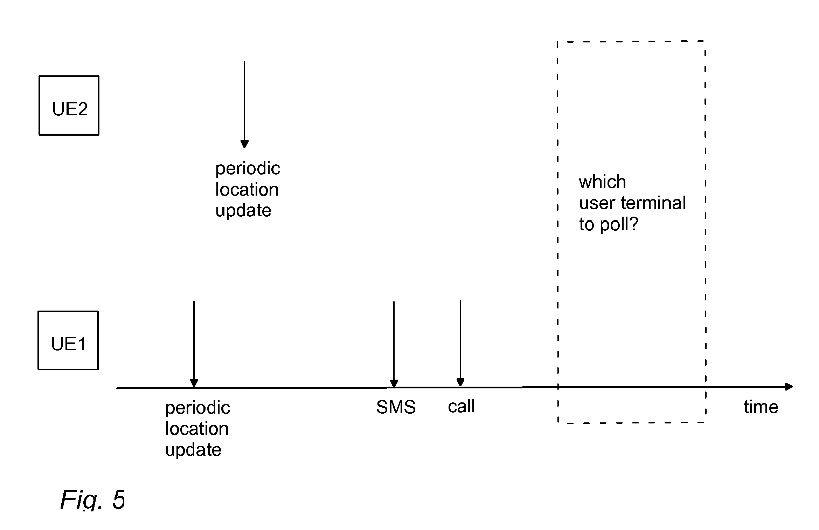

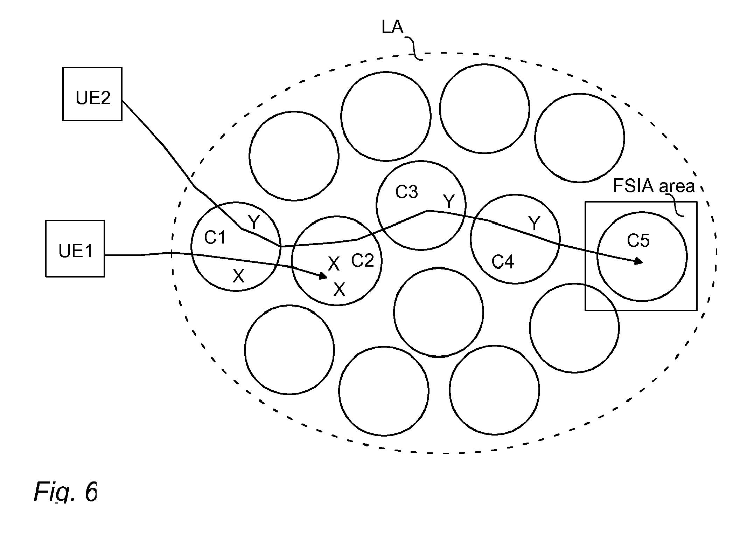

Figure 3 is a flow chart illustrating the functioning of a passive data collector function PDC according to an embodiment of the present solution. Referring to Figure 3, passive location data is received in the passive data collector function PDC in step 3-1 from a mobile switching centre MSC/visitor location centre VLR. The passive location data includes information on one or more user terminals UE that are supposed to be in the PLMN area. In step 3-2, PDC receives a location data request from MW, including information on a find-subscribers-in-area (FSIA) request transmitted by a location application LAP. Based on the passive location data, a polling priority list is formed in step 3-3 by including, in the polling priority list, information on the user terminals UE that are supposed to be in the PLMN area. In step 3-4, it is checked whether or not priority user terminals UE are defined in the location system. If priority user terminals UE are defined, non-priority user terminals are removed 3-5 from the polling priority list (or they are put 3-5 to the bottom of the polling priority list). In step 3-6, it is checked whether or not priority location areas (LAs) are defined in the location system. If priority location areas are defined, user terminals that are included in the polling priority list but that are not located in these priority areas are dropped 3-7 from the polling priority list (or they are moved 3-7 to the bottom of the polling priority list). In step 3-8, an activity analysis may be carried out (as described below in connection with Figure 5) by the location system and user terminals prioritized based on the activity analysis. In step 3-9, a geographical analysis may be carried out (as described below in connection with Figure 6) by the location system and user terminals prioritized based on the geographical analysis. In step 3-10, it is checked whether or not the system has spare capacity to carry out active location polling according to the present solution. If the system has spare capacity, a procedure for receiving updated location information (e.g. sending a forced SMS and/or paging) on the user terminals included in the polling priority list is initiated 3-11 by PDC. This means that an active location data request is transmitted 3-11 from PDC to MSC/VLR via GMLC. In step 3-12, PDC receives updated passive location data from MSC/VLR, including information on the user terminals UE detected based on the active location polling. The received updated passive location data is stored 3-12, at least temporarily, in PDC. Based on the updated passive location data, PDC is able to transmit 3-13 a location data response via MW to LAP. The location data response includes a list of the detected user terminals in the area defined in the FSIA request. In step 3-14, it is checked whether or not it is time to update the polling priority list (e.g. whether or not a predetermined time limit for updating has been exceeded). If it is time to update the polling priority list, the process returns to step 3-4, from where it continues by forming a(n updated) polling priority list by including all user terminals in the polling priority list etc. If it is not yet time to update the polling priority list, the process returns to step 3-10, from where it continues by checking whether or not the location system has spare capacity etc. Another option is that the process ends after step 3-14 (not shown in Figure 3). It should be noted that steps 3-3 to 3-12 may be performed before, during, and/or after the step 3-2.

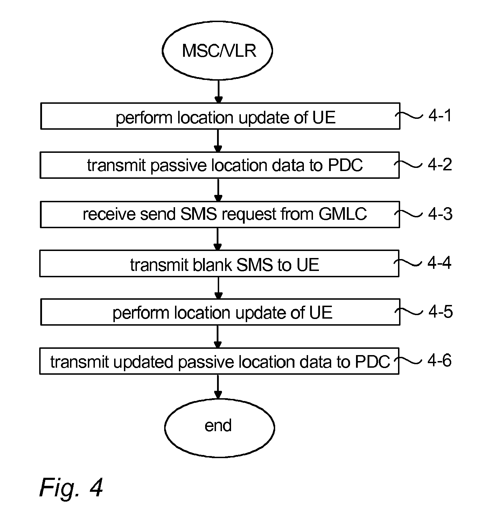

Figure 4 is a flow chart illustrating the functioning of a mobile switching centre/visitor location centre MSC/VLR according to an embodiment of the present solution. Referring to Figure 4, a location update or some other location-related procedure is carried out between MSC/VLR and at least one user terminal UE in step 4-1. In step 4-2, based on the location update of step 4-1, MSC/VLR transmits passive location data on the at least one user terminal UE to a passive data collector PDC located in a gateway mobile location centre GMLC-I. In step 4-3, MSC/VLR receives a send-SMS request (or some other location-related request) from a gateway mobile location centre function GMLC located in a gateway mobile location centre GMLC-I. The send-SMS request includes information about at least one user terminal UE included in a polling priority list. On the basis of the send-SMS request, MSC/VLR transmits 4-4 a blank short message (or some other signalling message that requires paging of the user terminal UE) to the user terminals UE included in the respective polling priority list. Based on the blank short messages, a "forced" location update of the user terminals UE is carried out between MSC/VLR and UE, and thus MSC/VLR finds out updated passive location data on the user terminals UE of interest. In step 4-6, MSC/VLR transmits the updated passive location data to PDC.

Selection of user terminals for the active location polling may be based on the behaviour of the user terminals, e.g. on the activity behaviour of the user terminals and/or on the geographical behaviour of the user terminals.

Figure 5 illustrates an activity behaviour analysis according to an embodiment of the present solution. According to the embodiment, the prioritization logic is based on the activity behaviour of user terminals UE1, UE2, wherein the activity behaviour analysis is based on the idea that it is advantageous to actively poll locations of those user terminals that are less likely to generate updated passive location data (their passive location data may be obsolete). In the example of Figure 5, a first user terminal UE1 regularly generates passive location data (e.g. transmits/receives short messages SMS, makes/receives calls etc.). A second user terminal UE2 generates passive location data due to periodic location updates only. Thus, it is more advantageous to prioritize the second user terminal UE2 for active location polling (it is better to poll the location of UE2, since it is less likely to have passive location data). The activity behaviour analysis may be implemented in the passive data collector PDC functionality since it is able to store history information (e.g. latest 5 passive location data incidents/user terminal) on the user terminals.

Figure 6 illustrates a geographical behaviour analysis according to an embodiment of the present solution. According to the embodiment, the prioritization logic is based on the geographical behaviour of user terminals UE1, UE2, wherein the geographical behaviour analysis is based on the idea that it is advantageous to actively poll locations of those terminals that are more likely to move. If there is information on areas of interest (e.g. FSIA areas), speed and direction (detected from the passive location data history stored in PDC) of the user terminal UE1, UE2 may also be utilized for the prioritization. In the example of Figure 6, the passive location data history shows that a first user terminal UE1 enters X a first cell C1 in a location area LA. Then the first user terminal UE1 is involved in two incidents X generating passive location data (e.g. SMS and a call) in a second cell C2. The passive location data history also shows that a second user terminal UE2 enters Y the first cell C1 in the location area LA. Then, the second user terminal UE2 is involved in an incident Y generating passive location data (e.g. an SMS) in a third cell C3 and in an incident Y generating passive location data (e.g. a call) in a fourth cell C4. If it is assumed that UE1 and UE2 entered the location area LA essentially at the same time and that the passive location data generating events happened approximately simultaneously, the second user terminal UE2 should be prioritized for active location polling on the basis of the fact that UE2 moves more if compared to UE1. Further, if the FSIA area has been defined as the find subscribers in area in the location area LA, a direction analysis shows that the second user terminal UE2 seems to be moving towards it (towards a fifth cell C5). So, also on the basis of the direction analysis, UE2 should be prioritized for active location polling (as UE2 is more likely to enter the FSIA area than UE1). The geographical behaviour analysis may be implemented in the passive data collector PDC functionality since it is able to store history information on the user terminals.

The present solution enables enhancing the FSIA functionality in various customer cases. For example, the present solution enables a timely detection of user terminals in mobile advertising campaign areas (even when using passive location data). For example, a mobile advertising campaign may be going on in a shopping centre, wherein the area of the shopping centre may be defined as an FSIA area (such as the FSIA area in Figure 6). The location system according to the present solution is able to provide information on the selected user terminals to a location application so that the location application is able to initialize transmission of mobile advertisements to the selected user terminals. The mobile advertisements may include e.g. short messages, multimedia messages, e-mails, etc.

According to an embodiment, the location system is able to receive, collect, store, and/or evaluate information on the location behaviour of the user terminals in the FSIA area or close to it. For example, if it is assumed that a user terminal UE has just entered the FSIA area (e.g. a shopping centre) where a mobile advertising campaign is going on, the user terminal UE may be defined as a priority user terminal as it has not yet received a specific mobile advertisement of the campaign. On the other hand, another user terminal that has already received the advertisement may be defined as a non-priority user terminal. It should be noted that some subscribers may not wish to receive mobile advertisements. So, the location system may be arranged to define user terminals belonging to these subscribers as non-priority user terminals. The location system according to the present solution may further be arranged to define roaming user terminals as priority user terminals only for campaigns that are run in a defined language such as English.

It should be noted that the location system is able to provide to the location application LAP a list of user terminals in the area anonymously so that the advertiser (e.g. the shopping centre) is able to run the advertising campaign without knowing the telephone numbers, mobile country codes, mobile network codes or any other identity data of the user terminals that are prioritized and/or receive the mobile advertisements.

Instead of or in addition to MSC/VLR, some other operator network element such as a serving GPRS support node (SGSN), a home location register (HLR), a billing system, an external probe system, or a real-time traffic monitoring tool may be utilized in the present solution for the provision of passive location data.

Instead of sending a blank short message (SMS) to the selected user terminals, the present solution may involve sending a blank multimedia message (MMS), for example.

The mobile advertisements may be sent to the selected user terminals in the form of a short message (SMS), a multimedia message (MMS), e-mail, etc.

According to an embodiment, the present solution involves transmitting a signalling message from the core network node MSC/VLR to a locating function according to a secure user plane location SUPL standard in order to locate a user terminal.

According to an embodiment, the present solution involves finding user terminals in a specific area for transmitting an alarm or a notification to the user terminals. This embodiment may be applied e.g. in case of emergency, like in case of fire.

An FSIA area according to the present solution may include a shopping centre, a school, an industrial plant or any other area where transmitting informative messages to user terminals in the area may be useful.

The items and steps shown in the figures are simplified and only aim at describing the idea of the present solution. The steps/points, signalling messages and the related functions described above in Figures 1 to 6 are in no absolute chronological order, and some of the steps/points may be performed simultaneously or in an order different from the given one. Other functions may also be executed between the steps/points or within the steps/points and other signalling messages may be sent between the illustrated messages. Some of the steps/points or part of the steps/points can also be left out or integrated together or replaced by a corresponding step/point or part of the step/point. The apparatus operations illustrate a procedure that may be implemented in one or more physical or logical entities. The signalling messages are only exemplary and may even comprise several separate messages for transmitting the same information. The messages serve as examples only and they may only contain some of the information mentioned above. In addition, the messages may also contain other information, and the titles may deviate from those given above. Instead of or in addition to a home network node and/or a visited network node, the above-described operations may be performed in any other element of a communications system.

In addition to prior art means, a system or system network nodes that implement the functionality of the present solution comprise means for providing location information on user terminals in the area. Existing network nodes and user terminals comprise processors and memory that may be utilized in the operations of the present solution. Any changes necessary in implementing the present solution may be carried out using supplements or updates of software routines and/or routines included in application-specific integrated circuits (ASIC) and/or programmable circuits, such as EPLDs (electrically programmable logic device) or FPGAs (field programmable gate array).

It will be obvious to a person skilled in the art that, as technology advances, the inventive concept may be implemented in various ways. The invention and its embodiments are not limited to the examples described above but may vary within the scope of the claims.

## Claims

1. A method of providing subscriber location information in a communications system (S) comprising an operator network (N), **characterized by**
performing (2-5, 3-3, 3-4, 3-5, 3-6, 3-7, 3-8, 3-9, 3-10) a prioritization act according to predetermined prioritization criteria, wherein the prioritization act is performed on the basis of passive location data (2-2) received in a gateway node (GMLC-I, PDC) from the operator network (N), the passive location data including location information on user terminals (UE, UE1, UE2) in the operator network (N);
selecting (2-5, 3-3, 3-4, 3-5, 3-6, 3-7, 3-8, 3-9, 3-10), on the basis of said prioritization act, one or more of said user terminals as polling priority user terminals (UE, UE2);
requesting (2-7, 3-11), on the basis of said selecting, one or more network nodes (MSC/VLR) in the operator network (N) to perform an act for generating updated passive location data;
receiving (3-12) the updated passive location data (2-11) in the gateway node (GMLC-I, PDC), the updated passive location data (2-11) including information on detected polling priority user terminals (UE, UE2); and
storing (3-12) the received updated passive location data in the gateway node (GMLC-I, PDC).

2. A method according to claim 1, **characterized in that** the prioritization act comprises evaluating available transmission capacity of the system, wherein said requesting (2-7, 3-11) is carried out only if there is capacity available in the system (S) for generating the updated passive location data.

3. A method according to claim 1 or 2, **characterized in that** the prioritization act comprises evaluating the activity behaviour of the user terminal, wherein the user terminals, the passive location data of which is obsolete, are prioritized.

4. A method according to claim 1, 2 or 3, **characterized in that** the prioritization act comprises evaluating the geographical behaviour of the user terminal, wherein the user terminals that move the most are prioritized.

5. A method according to any of claims 1 to 4, **characterized in that** it comprises transmitting a forced short message SMS or a multimedia message MMS to the polling priority user terminals.

6. A method according to any of claims 1 to 5, **characterized in that** the passive location data includes data generated based on a periodic location update of the user terminal.

7. A method according to any of claims 1 to 6, **characterized in that** the passive location data includes data generated based on a location update of the user terminal due to a call, a short message SMS, and/or a multimedia message MMS.

8. A method according to any of claims 1 to 7, **characterized by**
receiving (3-2), in the gateway node (GMLC-I, PDC), a request (2-3, 2-4) for finding subscribers in an area from an application node (LAP); and
on the basis of the updated passive location data, providing (2-11, 2-12, 3-13) information on the user terminals detected in the area to the application node (LAP).

9. A communications system (S) comprising an operator network (N), **characterized in that** the system (S) is configured to
perform a prioritization act according to predetermined prioritization criteria, wherein the prioritization act is performed on the basis of passive location data received in a gateway node (GMLC-I, PDC) from the operator network (N), the passive location data including location information on user terminals (UE, UE1, UE2) in the operator network (N);
select, on the basis of said prioritization act, one or more of said user terminals as polling priority user terminals (UE, UE2);
perform, on the basis of said selecting, an act for generating updated passive location data;
receive the updated passive location data in the gateway node (GMLC-I), the updated passive location data including information on detected polling priority user terminals (UE, UE2); and
store the received updated passive location data in the gateway node (GMLC-I, PDC).

10. A communications system (S) according to claim 9, **characterized in that** it is configured to
receive, in the gateway node (GMLC-I, PDC), a request for finding subscribers in an area from an application node (LAP); and
on the basis of the updated passive location data, provide information on the user terminals detected in the area to the application node (LAP).

11. A gateway node (GMLC-I, PDC) of a communications system (S), the system (S) comprising an operator network (N), **characterized in that** the gateway node (GMLC-I) is configured to
perform a prioritization act according to predetermined prioritization criteria; wherein the gateway node (GMLC-I) is arranged to perform the prioritization act on the basis of passive location data received from the operator network (N), the passive location data including location information on user terminals (UE, UE1, UE2) in the operator network (N);
select, on the basis of said prioritization act, one or more of said user terminals as polling priority user terminals (UE, UE2);
request, on the basis of said selecting, one or more network nodes (MSC/VLR) in the operator network (N) to perform an act for generating updated passive location data;
receive the updated passive location data, the updated passive location data including information on detected polling priority user terminals (UE, UE2); and
store the received updated passive location data in the gateway node (GMLC-I, PDC).

12. A gateway node (GMLC-I, PDC) according to claim 11, **characterized in that** it is arranged to evaluate the available transmission capacity of the system, wherein it is arranged to carry out said requesting only if there is capacity available in the system (S) for generating the updated passive location data.

13. A gateway node (GMLC-I, PDC) according to claim 11 or 12, **characterized in that** it is arranged to evaluate the activity behaviour of the user terminals (UE1, UE2), wherein it is arranged to prioritize the user terminals (UE2), the passive location data of which is obsolete.

14. A gateway node (GMLC-I, PDC) according to claim 11, 12 or 13, **characterized in that** it is arranged to evaluate the geographical behaviour of the user terminals (UE1, UE2), wherein it is arranged to prioritize the user terminals (UE2) that move the most.

15. A gateway node (GMLC-I, PDC) according to any of claims 11 to 14, **characterized in that it** is arranged to request the core network node (MSC/VLR) to transmit a forced short message SMS or a multimedia message MMS to the polling priority user terminals.

16. A gateway node (GMLC-I, PDC) according to any of claims 11 to 15, **characterized in that** the passive location data includes data generated based on a periodic location update of the user terminal, and/or data generated based on a location update of the user terminal due to a location area change, a call, a short message SMS, and/or a multimedia message MMS.

17. A gateway node (GMLC-I, PDC) according to any of claims 11 to 16, **characterized in that** it is configured to
receive a request for finding subscribers in an area from an application node (LAP); and
on the basis of the updated passive location data, provide information on the user terminals detected in the area to the application node (LAP).

18. A gateway node (GMLC-I, PDC) according to any of claims 11 to 17, **characterized in that** it comprises a gateway mobile location centre GMLC (GMLC-I) including a passive data collector PDC function (PDC).

19. A core network node (MSC/VLR) of a communications system (S), the system (S) comprising an operator network (N), wherein the core network node (MSC/VLR) is capable of transmitting passive location data to a gateway node (GMLC-I, PDC), **characterized in that** the core network node (MSC/VLR) is configured to
receive, from the gateway node, a request to perform an act for generating updated passive location data on user terminals selected as polling priority user terminals,
transmit, on the basis of the request, to the polling priority user terminals (UE, UE2) or to a locating function, a signalling message for receiving location information on the polling priority user terminals, and
transmit, in response to receiving the location information, the updated passive location data to the gateway node (GMLC-I, PDC), the updated passive location data including information on detected polling priority user terminals (UE, UE2).

20. A core network node (MSC/VLR) according to claim 19, **characterized in that** the signalling message transmitted to the user terminal includes a blank short message or a blank multimedia message.

21. A core network node (MSC/VLR) according to claim 19 or 20, **characterized in that** the signalling message transmitted to the locating function includes a message according to a secure user plane location SUPL standard.

22. A core network node (MSC/VLR) according to claim 19, 20 or 21, **characterized in that** it is arranged to transmit a forced short message SMS or a multimedia message MMS to the polling priority user terminals.

23. A core network node (MSC/VLR) according to any of claims 19 to 22, **characterized in that** it includes at least one of a mobile switching centre/visitor location register MSC/VLR, a serving GPRS support node SGSN, a home location register HLR, a billing system, an external probe system, and a real-time traffic monitoring tool.
